# EUROPÄISCHE PATENTSCHRIFT

(11) **EP 1 309 662 B1**
(45) Veröffentlichungstag und Bekanntmachung des Hinweises auf die Patenterteilung: **07.01.2009**
(21) Anmeldenummer: 01980245.3
(22) Anmeldetag: 14.08.2001
(51) Int. Cl.: C09B 11/18, C09D 11/00

(54) **TRIARYLMETHANFARBSTOFFE**
TRIARYLMETHANE DYES
COLORANTS TRIARYLMETHANE

(30) Priorität: 14.08.2000 DE 10039701
(43) Veröffentlichungstag der Anmeldung: 14.05.2003
(73) Patentinhaber: BASF SE, 67056 Ludwigshafen (DE)
(72) Erfinder: KAST, Hellmut, 67240 Bobenheim-Roxheim (DE); GESSNER, Thomas, 69120 Heidelberg (DE); TRESCH, Rainer, 67133 Maxdorf (DE)
(74) Vertreter: Thalhammer, Wolfgang
(86) Internationale Anmeldenummer: PCT/EP2001/009396
(87) Internationale Veröffentlichungsnummer: WO 2002/014436

(56) Entgegenhaltungen:
- EP-A- 0 564 930
- EP-A- 0 568 806
- DE-C- 741 008
- FR-A- 1 406 247

## Beschreibung

Die vorliegende Erfindung betrifft ein Verfahren zur Herstellung von Triarylmethanfarbstoffen sowie die Verwendung der Triarylmethanfarbstoffe.

Triarylmethanfarbstoffe werden in großem Umfang zur Herstellung von Papierfarbstoffen, Druckfarben, Kugelschreiberpasten usw. verwendet. Unter der Bezeichnung "Victoriablau" ist eine Gruppe von kationischen Triarylmethanfarbstoffen bekannt, die einen Alkylamino- und/oder Arylamino-substituierten Naphthylrest enthalten und zur Herstellung lichtechter brillanter Blaupigmente und zum Färben von Papierfasern dienen. Die Struktur der Victoriablau-Farbstoffe ist nachstehend angegeben 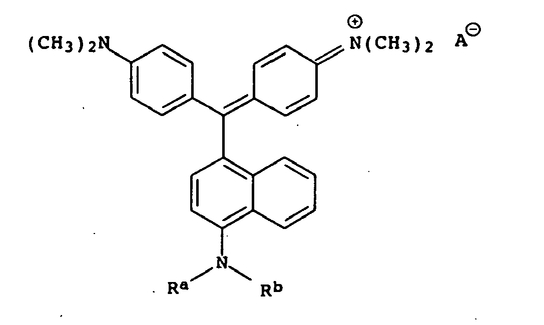 wobei R^{a} für Methyl, Ethyl oder Phenyl, R^{b} für Wasserstoff oder Methyl und A^{⊝} für das Äquivalent eines Anions steht.

Zubereitungen von Victoriablau-Farbstoffen können insbesondere herstellungsbedingt oder aufgrund von Hydrolyse bei der Lagerung, insbesondere bei hohen Temperaturen, Spuren von Michlers Keton der nachstehend gezeigten Formel enthalten.

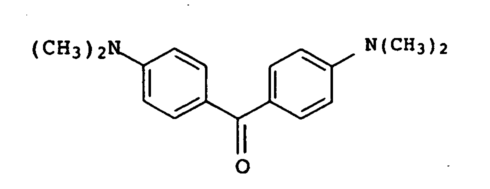

Neuere Untersuchungen haben gezeigt, dass Michlers Keton toxikologisch bedenklich ist und insbesondere karzinogene Eigenschaften aufweist. Es besteht daher ein Bedürfnis nach Triarylmethanfarbstoffen, bei deren Herstellung nicht die Gefahr einer Kontamination mit Michlers Keton besteht und die bei der Lagerung, auch unter Bedingungen erhöhter Temperatur und Luftfeuchtigkeit, kein Michlers Keton abspalten.

Die WO 92/04416 schlägt zur Lösung dieses Problems vor, wenigstens eine Methylgruppe des Dimethylaminophenylrests durch eine andere Alkyl-, eine Aralkyl- oder Arylgruppe, z. B. durch Ethylgruppen, zu ersetzen. Es hat sich gezeigt, dass auf diese weise zwar Triarylmethanfarbstoffe mit zufriedenstellenden färberischen Eigenschaften erhalten werden können, die Löslichkeitseigenschaften der Farbstoffe aber durch den Ersatz der Methylgruppe stark verändert werden. Dies ist insofern nachteilig, als die in der WO 92/04416 vorgeschlagenen Farbstoffe in Druckfarben, Kugelschreiberpasten und zum Färben von Papierfasern nicht ohne größere Anpassungen der eingeführten Rezepturen anstelle von Victoriablau- oder anderen bisher verwendeten Triarylmethanfarbstoffen verwendet werden können.

Die EP-A 564 830 offenbart ein Verfahren zur Herstellung von Di- oder Triarylmethanfarbstoffen durch Oxidation einer Leukoverbindung in Gegenwart eines Verdünnungsmittels und eines sauerstoffübertragenden Katalysators, der ein komplexgebundenes Schwermetallion enthält, oder eines Katalysators auf der Basis von Molybdänsäure und Vanadiumverbindungen, wobei als Oxidationsmittel Peroxomonoschwefelsäure oder deren Salze verwendet werden.

Die FR-A 1406 247 beschreibt ein Verfahren zur Herstellung von Leukoderivaten von Polyaminotriphenylmethanen, bei dem man zwei Mol eines N-Alkanol-N-alkylanilins mit einem Mol eines o-substituierten Benzaldehyds umsetzt.

Die DE-A 27 29 918 und die DE-A 33 01 822 offenbaren bestimmte Bis(N,N-dihydroxyethyl-anilino)methan-Derivate.

Der vorliegenden Erfindung liegt daher die Aufgabe zugrunde, Triarylmethanfarbstoffe bereitzustellen, bei deren Herstellung Michlers Keton nicht als Nebenprodukt gebildet wird und/oder die bei der Lagerung, insbesondere bei erhöhter Temperatur und Feuchtigkeit, kein Michlers Keton abspalten und deren anwendungstechnischen Eigenschaften, z. B. Löslichkeitseigenschaften, im Wesentlichen ähnlich denen der entsprechenden, Dimethylaminophenylgruppen enthaltenden Farbstoffe sind.

Erfindungsgemäß wird diese Aufgabe durch das Verfahren gemäß Anspruch 1 gelöst. Es betrifft die Herstellung von Triarylmethanfarbstoffen der Formel I oder II, 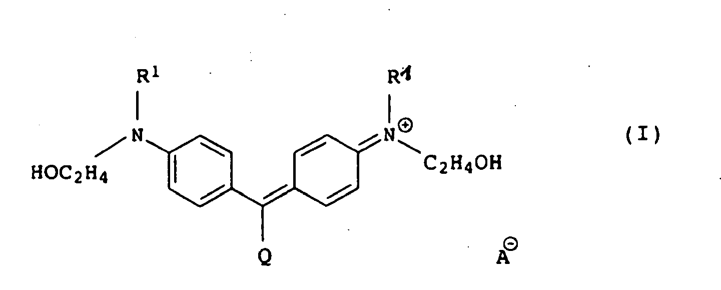 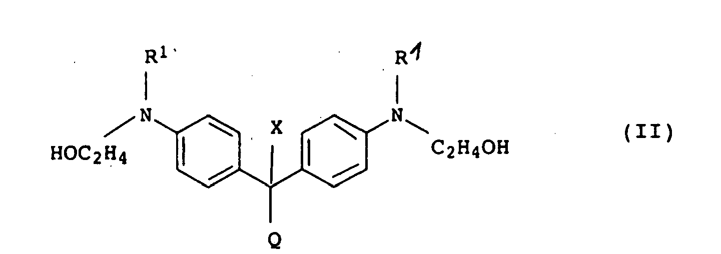 worin
- R¹: jeweils unabhängig für Methyl, Ethyl oder Hydroxyethyl stehen,
- Q: für Phenyl oder Naphthyl steht, welche ein oder zwei unter Methyl, Chlor, Amino, Methylamino, Ethylamino, Dimethylamino, Diethylamino, N-Ethyl-N-methylamino, N-Methyl-N-phenylamino, N-Ethyl-N-phenylamino, Phenylamino, Diphenylamino, Hydroxy, Methoxy und Hydroxysulfonyl ausgewählte Substituenten tragen können;
- A^{Θ}: für das Äquivalent eines Anions steht, und
- X: für Hydroxy oder Amino steht.
- Q: steht für einen Rest der Formel III oder IV, 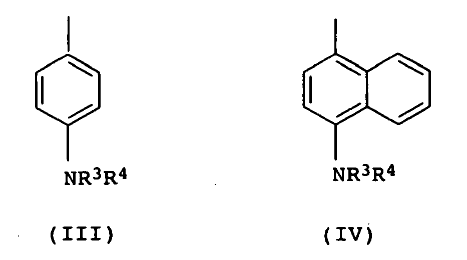
worin R³ und R⁴ unabhängig voneinander für Wasserstoff, Methyl, Ethyl oder Phenyl stehen.

Besonders bevorzugt steht Q für einen Rest der Formel V

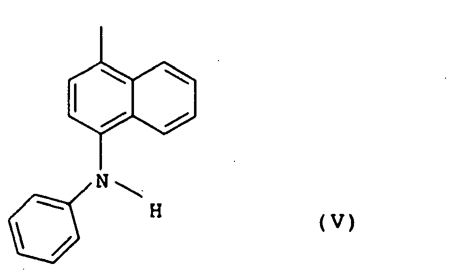

In den meisten Fällen ist bevorzugt, dass die Reste R¹ gleich sind.

A^{Θ} steht für das Äquivalent eines Anions einer anorganischen oder organischen Säure. Als Beispiele lassen sich Halogenid, z. B. Chlorid oder Bromid; Sulfat, Phosphat, Carboxylat, z. B. Formiat, Acetat, Lactat, Laurat, Myristat, Palmitat, Stearat, Adipat, Oleat, Benzoat, Phthalat, Isophthalat, Terephthalat, Naphthoat; Alkyl-, Aryl- oder Alkylarylsulfonat, wie Methansulfonat, Dodecylbenzolsulfonat; das Anion von Mono- und Dialkylestern der Phosphorsäure oder das Anion des N-Oleylsarcosins nennen.

Die Triarylmethanfarbstoffe der Formel I lassen sich auch in üblicher Weise in Farblacke überführen, wobei X in diesem Fall meist für das Anion einer komplexen anorganischen Säure, wie Phosphormolybdänsäure oder Phosphorwolframsäure steht.

Die Triarylmethanfarbstoffe der Formel I werden durch ein Verfahren erhalten, bei dem man ein N-Hydroxyethylanilin der Formel VI 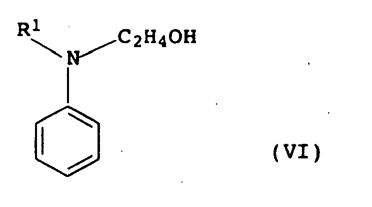 mit Formaldehyd zu einem 4,4'-Bis(hydroxyethylamino)diphenylmethan der Formel VII 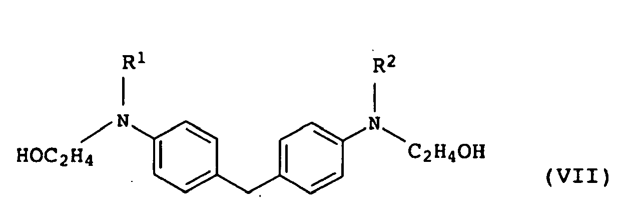 umsetzt und das 4,4'-Bis(hydroxyethylamino)diphenylmethan VII in Gegenwart eines Aminoaromaten der Formel VIII oder IX 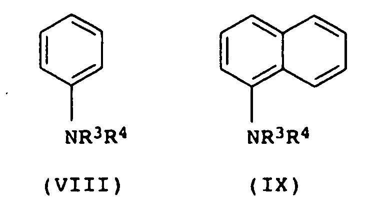 und einer Anionenquelle mit einem Oxidationsmittel behandelt, wobei ein Triarylmethanfarbstoff der Formel I erhalten wird. Dieser wird gegebenenfalls mit einem Alkalimetallhydroxid oder Ammoniak in einen Triarylmethanfarbstoff der Formel II überführt. In den Formeln VI bis IX haben die Reste R¹, R³ und R⁴ die bereits angegebene Bedeutung.

Formaldehyd wird zweckmäßigerweise in einer handelsüblichen oligomeren Form, wie Metaformaldehyd oder Paraformaldehyd, oder als wässrige Lösung eingesetzt. Die Umsetzung des N-Hydroxyethylanilins der Formel VI mit Formaldehyd erfolgt zweckmäßigerweise in einem geeigneten Lösungsmittel, wie Essigsäure, Methanol, Ethanol, Ethylenglykol, 1,2-Propandiol, Chloroform, Toluol, Ameisensäure, Tetrahydrofuran, Dioxan, n-Butylether, Benzoesäuremethylester, Ethylenglykolmethylether, Ethylenglykolethylether, Propylenglykolmethylether, Propylenglykolethylether, Dimethoxyethan oder Ethylacetat. Die Umsetzung erfolgt vorzugsweise unter saurer Katalyse, wobei als Katalysator z. B. geringe Mengen von konzentrierter Schwefelsäure, Sulfanilsäure, p-Toluolsulfonsäure und dergleichen, geeignet sind. Das 4,4'-Bis(hydroxyethylamino)diphenylmethan der Formel VII kann gewünschtenfalls nach üblichen Verfahren isoliert werden. Vorzugsweise wird die erhaltene Lösung jedoch direkt für die nachfolgende Oxidations-/Kondensationsreaktion zum Triarylmethanfarbstoff der Formel I eingesetzt. Als Oxidationsmittel hierfür sind z. B. Mangandioxid oder Chloranil geeignet.

Besonders bevorzugt verwendet man als Oxidationsmittel molekularen Sauerstoff in Form von Sauerstoffgas oder einem Sauerstoff enthaltenden Gasgemisch, wie insbesondere Luft. Die Oxidation mittels Sauerstoff erfolgt in Gegenwart eines Sauerstoff-aktivierenden, Schwermetall enthaltenden Katalysators und eines Redoxmediators.

Als Lösungsmittel für die Oxidation eignen sich die vorstehend genannten, wobei Essigsäure besonders bevorzugt ist, die gleichzeitig als Anionenquelle dient. Bei Verwendung anderer Lösungsmittel empfiehlt sich ein Zusatz von Essigsäure oder Ameisensäure als Anionenquelle.

Als Redoxmediatoren sind Verbindungen geeignet, die in einer oxidierten und einer reduzierten Form vorliegen können. Das Redoxpotential für den Übergang von der oxidierten zu der reduzierten Form sollte vorzugsweise im Bereich von 0 bis 1,0 Volt gegen Normalwasserstoffelektrode liegen. Als Redoxmediatoren sind insbesondere Benzochinone oder Phenanthrenchinone geeignet. Bevorzugte Redoxmediatoren sind durch F, Cl, Br, oder CN substituierte Benzochinone oder durch NO₂ substituierte Phenanthrenchinone. Als spezielle Beispiele lassen sich z. B. Tetrafluor-1,4-benzochinon, Tetrachlor-1,4-benzochinon, Tetrabrom-1,4-benzochinon, Dichlordicyan-1,4-benzochinon oder Tetracyan-1,4-benzochinon, 2-Nitrophenanthrenchinon, 2,7-Dinitrophenanthrenchinon oder 4,5-Dinitrophenanthrenchinon, Tetra-chlor-1,2-benzochinon oder Tetrabrom-1,2-benzochinon anführen. Besonders bevorzugt werden Tetrachlor-1,4-benzochinon oder Tetrabrom-1,4-benzochinon verwendet. Die Chinone können als solche oder in Form der Hydrochinone eingesetzt werden. Nitrophenanthrenchinone sowie die Halogenchinone können in reiner Form oder als bei der Synthese anfallende Gemische eingesetzt werden.

Der Redoxmediator wird vorzugsweise in einer Menge von 0,1 bis 15 Mol-%, insbesondere 1 bis 10 Mol-%, bezogen auf das 4,4'-Bis (hydroxyethylamino)diphenylmethan VII eingesetzt.

Bei dem Sauerstoff-aktivierenden, Schwermetall enthaltenden Katalysator handelt es sich um Komplexe von Übergangsmetallen, vorzugsweise Eisen oder Cobalt, mit vorzugsweise mehrzähnigen Liganden und vorzugsweise planarer Konfiguration. Unter den Liganden sind Tetraaza[14]annulene oder Azomethine des 2-Hydroxybenzaldehyds mit Diaminen besonders bevorzugt.

Bevorzugte Tetraazaannulen-Komplexe weisen folgende allgemeine Strukturformel auf, 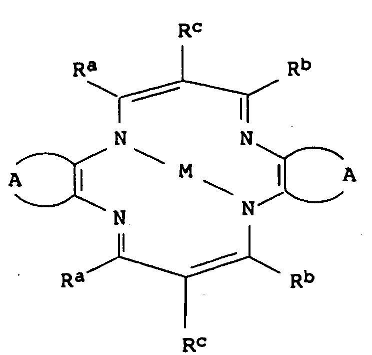 in der M für Fe oder Co steht,
R^{a} und R^{b} für Wasserstoff, C₁-C₆-Alkyl oder C₆-C₁₄-Aryl, insbesondere Wasserstoff, stehen und A jeweils für einen zweiwertigen Rest steht, der zusammen mit den den Rest A tragenden Kohlenstoffatomen einen aromatischen Ring, z. B. einen Benzolring, oder heterocyclischen Ring, z. B. einen Pyrrolring, ausbildet. Dieser Ring kann Reste, wie Methyl und Chlor, tragen.
R^{c} steht für Wasserstoff, C₁-C₆-Alkyl, C₁-C₆-Alkoxy, Arylazo, Hydroxy, COOR' (mit R'= z. B. C₁-C₆-Alkyl, C₆-C₁₀-Aryl oder C₇-C₁₄-Aralkyl), 4-Pyridinyl oder N-Pyridinio.

Eisen-5,14-dihydrodibenzo[b,i][1,4,8,11]tetraazacyclotetradecinat ist am meisten bevorzugt.

Ein Verfahren zur Herstellung von Triarylmethanfarbstoffen durch katalytische Oxidation, das zur Herstellung der erfindungsgemäßen Farbstoffe analog herangezogen werden kann, ist in der DE-AS 2 334 918 sowie der DE-PS 2 152 703 beschrieben, auf die vollinhaltlich Bezug genommen wird.

Die Erfindung betrifft außerdem einem Triarylmethanfarbstoff des Formel Ia oder IIa gemäß Anspruch 4 und eine Farbmittelzubereitung, die wenigstens einen kationischen Triarylmethanfarbstoff der Formel Ia oder eine Farbbase der Formel IIa sowie ein Vehikel und gegebenenfalls ein Bindemittel und gegebenenfalls weitere übliche Hilfsstoffe, wie Dispergiermittel oder Verdicker, enthält. Die Farbmittelzubereitung kann z. B. zum Färben von Papierfasern, als Stempelfarbe, Farbbänder für Drucker und Schreibmaschinen, wie insbesondere Thermotransferfarbbänder oder Farbbänder für Schreibmaschinen oder Typenschlagdrucker; Druckfarbe, insbesondere für den Tiefdruck, Siebdruck oder Offsetdruck, oder Aufzeichnungsflüssigkeiten, wie insbesondere Pastentinten für Kugelschreiber, verwendet werden.

Geeignete Vehikel sind unter anderem oleophile Lösungsmittel wie Öle, z. B. Rapsöl, Rizinusöl oder Sojaöl; Fette, Fettsäuren, wie Ölsäure; aromatische Kohlenwasserstoffe, wie Toluol, Xylol, Chlorbenzol; aliphatische Kohlenwasserstoffe, wie Benzine; Alkohole, wie Benzylalkohol, Propanol, Isobutanol; Ether, wie Tetrahydrofuran; halogenierte Kohlenwasserstoffe, wie Methylenchlorid; Ketone, wie Methylethylketon, Cyclopentanon, Cyclohexanon; Glykole, Glykolether oder Polyglykole.

Weiterhin sind bei Raumtemperatur feste Vehikel geeignet, insbesondere Wachse, wie Candellilawachs, Carnaubawachs, Paraffine, oder thermoplastische Harze.

Als Bindemittel eignen sich z. B. natürliche, modifizierte oder synthetische Harze, Celluloseester, wie Ethylcellulose, Ethylhydroxyethylcellulose; Polyvinylbutyrat, Polyvinylacetat, Cellulosepropionat und dergleichen.

Geeignete Dispergiermittel sind z. B. Sorbitanfettsäureester.

Die erfindungsgemäßen Triarylmethanfarbstoffe können auch mit anderen Farbstoffen oder Pigmenten abgemischt werden, um erwünschte Farbtöne zu erzielen.

Die Farbmittelzubereitung kann zur Herstellung von Thermotransferfarbbändern auf einen folienförmigen Träger oder dergleichen aufgebracht werden. Zur Herstellung von Farbbändern für Schreibmaschinen und Typenschlagdrucker kann ein textiler Träger, z. B. ein Nylonband, mit der Farbmittelzubereitung getränkt werden.

Triarylmethanfarbstoffe der Formel I eignen sich außerdem zum Färben und Nuancieren von Papier in der Masse. Zur Massefärbung werden die Farbstoffe, in der Regel in flüssiger Formulierung, bei der Papierherstellung dem wässrigen Faserbrei zugesetzt.

Die Erfindung wird durch die folgenden Beispiele näher veranschaulicht (alle Teile sind Gewichtsteile):

### Beispiele

### Beispiel 1

Zu einer Mischung aus 340 Teilen N-Hydroxyethyl-N-ethylanilin, 329 Teilen Essigsäure und 2 Teilen Sulfanilsäure werden unter Rühren bei 40 bis 70 °C 111 Teile einer 30 %igen Formalinlösung zugetropft. Die Reaktionsmischung wird anschließend eine weitere Stunde bei 65 bis 70°C gehalten. Zu der auf 35 °C abgekühlten Reaktionslösung werden 325 Teile Essigsäure, 231 Teile Propylenglykol, 231 Teile N-Phenyl-1-naphthylamin, 5 Teile Chloranil und 9 Teile des Fe-Komplexes von Dihydrodibenzotetraaza[14]annulens (wasserfeucht; 47 %ig) zugegeben und die Mischung bei 40 bis 50°C unter intensivem Rühren mit Luft begast. Anschließend wird die Lösung klärfiltriert. Es bilden sich 1480 Teile einer konzentrierten blauen Lösung des Farbstoffs der Formel I mit R¹ = R² = Ethyl, A^{Θ} = Acetat. Extinktionsmaxima bei 610 nm in Ethanol 96 %. Die Farbstofflösung kann direkt oder mit Wasser verdünnt zum Färben von Papier in der Masse eingesetzt werden.

### Beispiel 2

Zu einer Lösung von 1500 Teilen Wasser und 427 Teilen einer 50 %igen Natronlauge werden unter Rühren bei 50 bis 70°C 600 Teile der Farbstofflösung von Beispiel 1 zugetropft. Es bildet sich eine Suspension, die 6 Stunden bei 50 bis 70°C gehalten wird. Die ausgefallene Farbbase wird abfiltriert und mit Wasser neutral gewaschen. Die Ausbeute beträgt nach Trocknung 223 Teile. Die Farbbase eignet sich zur Herstellung von Kugelschreiberpasten und zum Schönen von Toluol-Tiefdruckfarben.

### Beispiel 3

In 728 Teilen Wasser werden 165 Teile der Farbbase von Beispiel 2 suspendiert und unter Rühren bei 20 bis 35°C 38 Teile von 32 %iger Salzsäure im Verlauf von zwei Stunden zugegeben. Die Suspension wird 6 Stunden bei 30 bis 40°C gehalten. Nach Filtration und Trocknung werden 181 Teile des Farbstoffs der Formel I (R¹ = R² = Ethyl, A^{Θ} = Chlorid) erhalten. Der Farbstoff eignet sich u. a. zur Herstellung von lösungsmittelhaltigen Tinten.

### Beispiel 4

288 Teile der Farbbase von Beispiel 2 werden in einer Lösung von 400 g Phenylglykol, 100 g Benzylalkohol und 170 g Ölsäure bei 50 bis 70 °C unter Rühren gelöst. Es bildet sich eine Lösung des Farbstoffs der Formel I (R¹ = R² = Ethyl, A^{Θ} = Oleat), der zur Herstellung von Kugelschreiberpasten und zum Schönen von Toluol-Tiefdruckfarben benutzt werden kann. Anstelle von Ölsäure kann auch N-Oleylsarkosin oder ein Gemisch des Mono-/Di-2-ethylhexylesters der Phosphorsäure eingesetzt werden.

### Beispiel 5

Eine Mischung aus 311 Teilen N-Hydroxyethyl-N-methylanilin, 680 Teilen Essigsäure, 33 Teilen Paraformaldehyd und 2 Teilen Sulfanilsäure wird unter Rühren auf 40°C erwärmt. Durch die einsetzende Kondensation steigt die Temperatur auf 65 bis 70 °C. Die Reaktionsmischung wird anschließend eine weitere Stunde bei 65 bis 70°C gehalten. Zu der auf 35 °C abgekühlten Reaktionsmischung werden 224 Teile Propylenglykol, 231 Teile N-Phenyl-1-naphthylamin, 5 Teile Chloranil und 9 Teile des Fe-Komplexes von Dihydrodibenzotetraaza[14]annulen (wasserfeucht; 47 %ig) zugegeben und die Mischung bei 40 bis 50 °C unter intensivem Rühren mit Luft begast. Es bilden sich 751 Teile einer konzentrierten blauen Lösung des Farbstoffs der Formel I mit R¹ = R² = Methyl, A^{Θ} = Acetat. Extintionsmaxima bei 604 nm in Ethanol 96 %. Die Farbstofflösung kann direkt zum Färben von Papier in der Masse eingesetzt werden.

### Beispiel 6

32,8 g (0,15 mol) N-Phenyl-1-naphthylamin und 56,1 g (0,15 mol) 4,4'-Bis[di-(2-hydroxyethyl)-amino]diphenylmethan wurden in 150 g Essigsäure und 30 g 1,2-Propandiol bei 100 °C gelöst. Nach Abkühlen der Lösung auf 44 - 46 °C wurden 1,5 g Chloranil und 1,5 g Eisen-5,14-dihydrodibenzo[b,i][5,9,14,18]tetraaza[14]-annulen zugegeben. Anschließend wurde die Lösung so lange mit Sauerstoff begast, bis 3,4 1 aufgenommen worden waren. Die tiefblaue Lösung wurde auf Raumtemperatur abgekühlt und klärfiltriert. Es wurden 270 g Farbstofflösung erhalten.

## Patentansprüche

1. Verfahren zur Herstellung eines Triarylmethanfarbstoffs der Formel I oder II 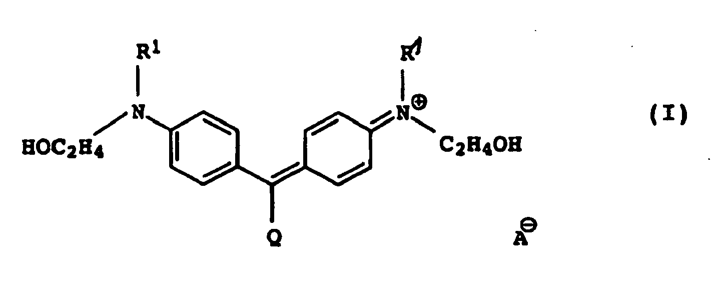 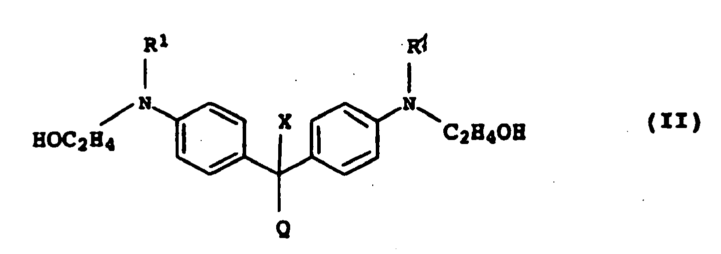 worin
R¹ jeweils unabhängig für Methyl, Ethyl oder Hydroxyethyl steht,
Q für einen Rest der Formel III oder IV steht, 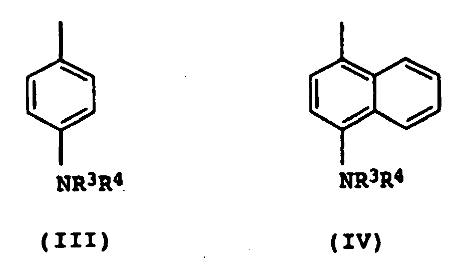
R³ und R⁴ unabhängig voneinander für Wasserstoff, Methyl, Ethyl oder Phenyl stehen,
A^{Θ} für das Äquivalent eines Anions steht, und
X für Hydroxy oder Amino steht,
bei dem man ein N-Hydroxy-ethylanilin der Formel VI 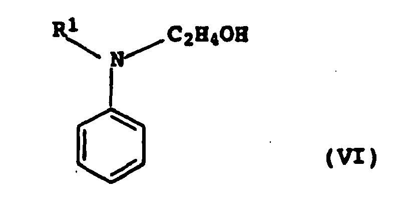 mit Formaldehyd zu einem 4,4'-Bis(hydrowethylamino)diphenylmethan der Formel VII 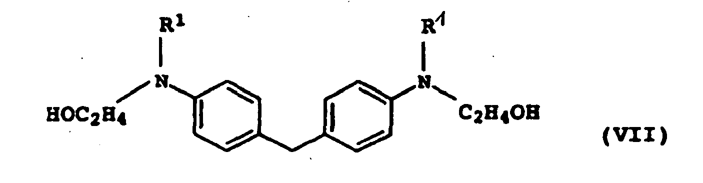 umsetzt und das 4,4'-Bis(hydroxyethylamino)diphenylmethan VII in Gegenwart einen Aminoaromaten der Formel VIII oder IX 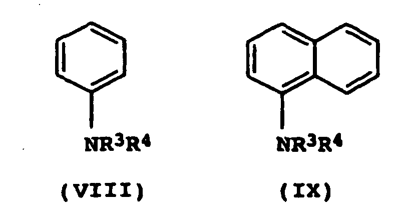 und einer Anionenquelle mit einem Oxidationsmittel behandelt, wobei ein Triarylmethanfarbstoff der Formel I erhalten wird, der gegebenenfalls mit einem Alkalimetallhydroxid oder Ammoniak in einen Triarylmethanfarbstoff der Formel II überführt wird.

2. Verfahren nach Anspruch 1, worin Q für einen Rest der Formel V steht.

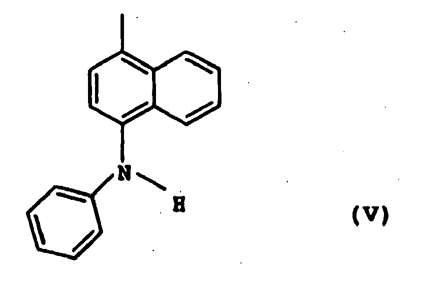

3. Verfahren nach Anspruch 1 oder 2, bei dem das Oxidationsmittel molekularer Sauerstoff ist und die Behandlung in Gegenwart eines Sauerstoff-aktivierenden, Schwermetall enthaltenden Katalysators und eines Redoxmediators erfolgt.

4. Triarylmethanfarbstoff der Formel Ia oder IIa 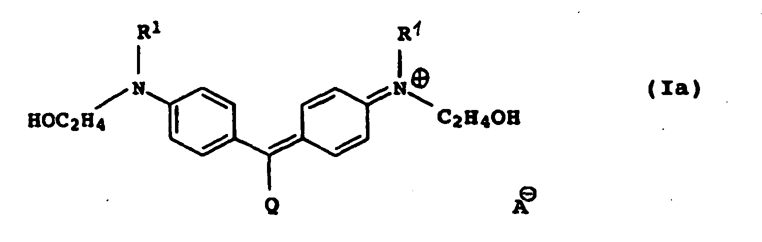 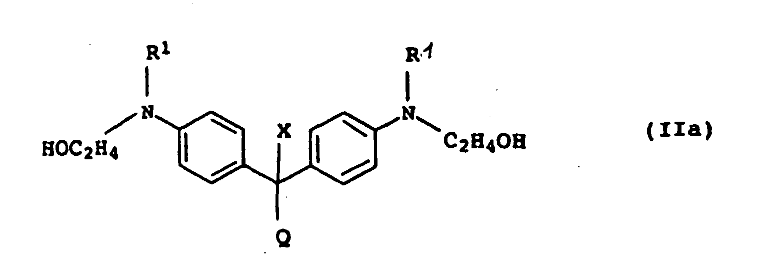 worin
R¹ für Methyl, Ethyl oder Hydroxyethyl steht,
Q für 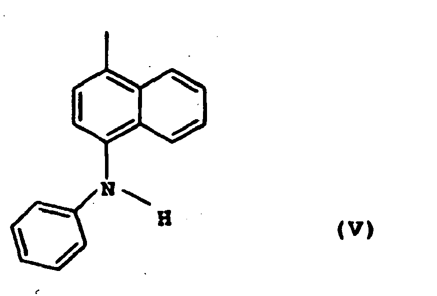 steht,
A^{Θ} für das Äquivalent eines Anions steht, und
X für Hydroxy oder Amino steht.

5. Farbmittelzubereitung, enthaltend wenigstens einen Triarylmethanfarbstoff der Formel Ia oder IIa nach Anspruch 4 und wenigstens ein Vehikel.

6. Verwendung des Triarylmethanfarbstoffs der Formel Ia oder IIa nach Anspruch 4 zur Färbung von Papierfasern oder zur Herstellung von Farbbändern, Stempelkissenfarben, Druckfarben und Aufzeichnungsflüssigkeiten.

## Claims

1. A process for preparing a triarylmethane dye of the formula I or II 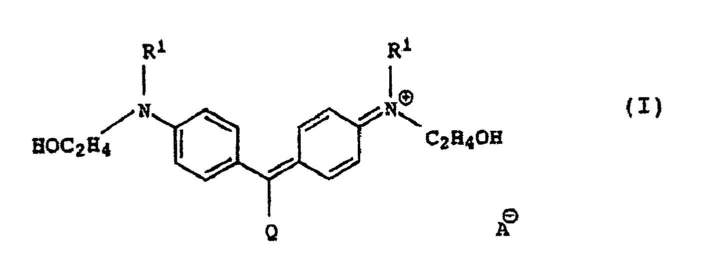 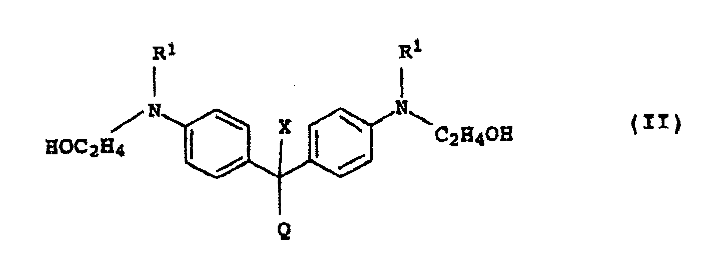 where
R¹ in each occurrence is independently methyl, ethyl or hydroxyethyl,
Q is a radical of the formula III or IV 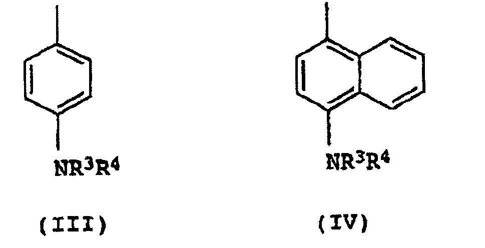
R³ and R⁴ are independently hydrogen, methyl, ethyl or phenyl,
A^{Θ} is the equivalent of an anion, and
X is hydroxyl or amino,
which comprises reacting an N-hydroxyethylaniline of the formula VI 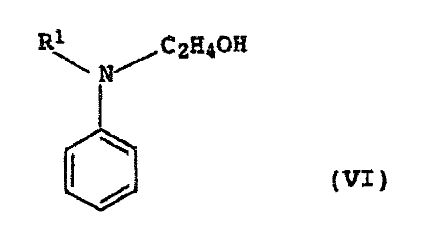 with formaldehyde to form a 4,4'-bis(hydroxyethylamino)diphenylmethane of the formula VII 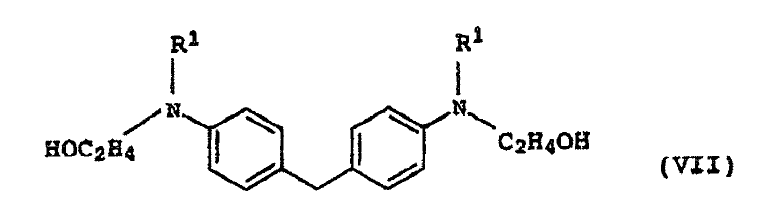 and treating the 4,4'-bis(hydroxyethylamino)-diphenylmethane VII with an oxidizing agent in the presence of an aminoaromatic of the formula VIII or IX 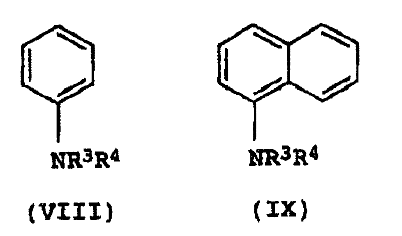 and of an anion source to obtain a triarylmethane dye of the formula I which is optionally converted with an alkali metal hydroxide or ammonia into a triarylmethane dye of the formula II.

2. The process according to claim 1 wherein Q is a radical of the formula V.

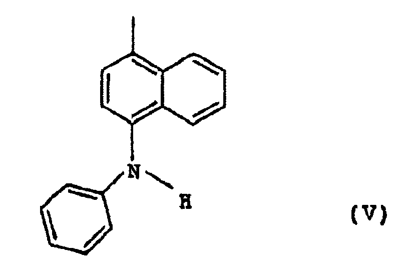

3. The process according to claim 1 or 2 wherein the oxidizing agent is molecular oxygen and the treating is effected in the presence of an oxygen-activating heavy metal catalyst and of a redox mediator.

4. A triarylmethane dye of the formula Ia or IIa 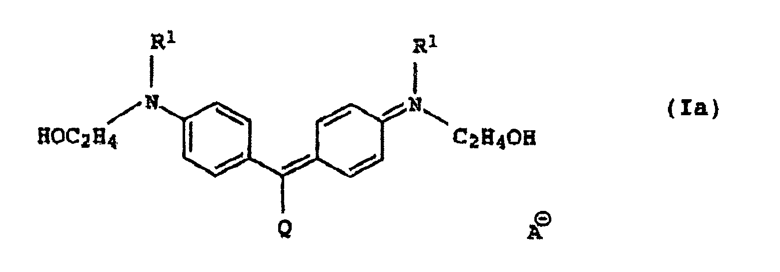 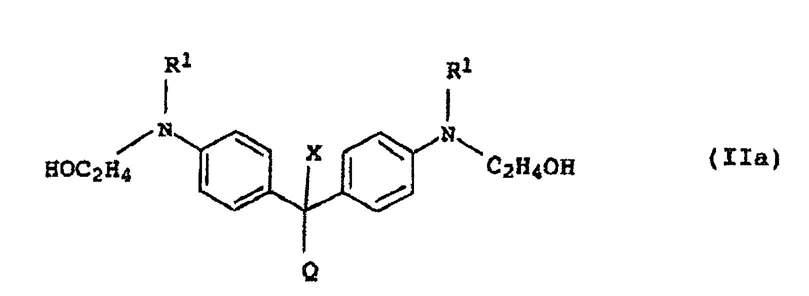 where
R¹ is methyl, ethyl or hydroxyethyl,
Q is 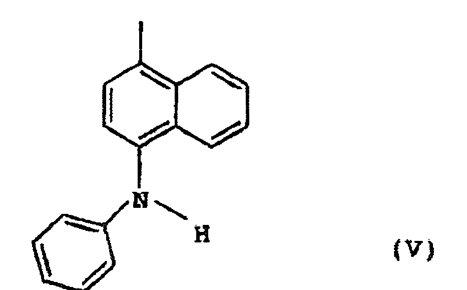
A^{Θ} is the equivalent of an anion, and
X is hydroxyl or amino.

5. A colorant preparation comprising at least one triarylmethane dye of the formula Ia or IIa as set forth in claim 4 and at least one vehicle.

6. The use of the triarylmethane dye of the formula Ia or IIa as set forth in claim 4 for dyeing paper fiber or for producing ink ribbons, stamp pad inks, printing inks and recording fluids.

## Revendications

1. Procédé pour la préparation d'un colorant de type triarylméthane de formule I ou II 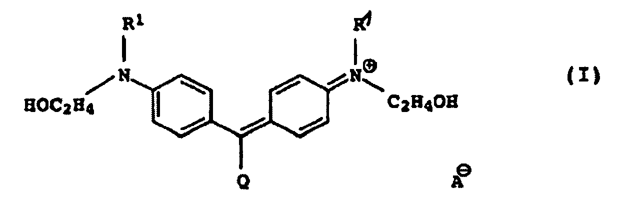 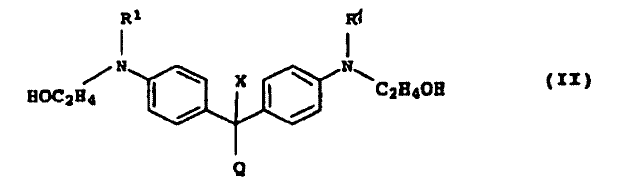 où
R¹ représente, à chaque fois indépendamment, méthyle, éthyle ou hydroxyéthyle,
Q représente un radical de formule III ou IV, 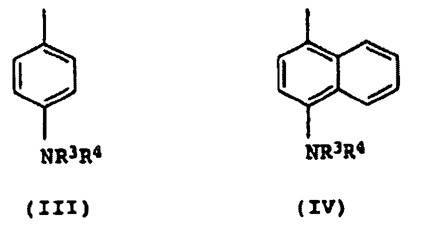
R³ et R⁴ représentent, indépendamment l'un de l'autre, hydrogène, méthyle, éthyle ou phényle,
A^{Θ} représente l'équivalent d'un anion, et
X représente hydroxy ou amino,
dans lequel on transforme une N-hydroxyéthylaniline de formule VI 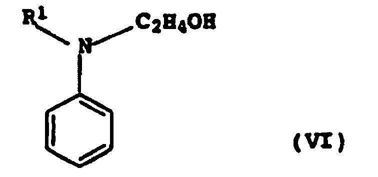 avec du formaldéhyde en un 4,4'-bis(hydroxyéthylamino)diphénylméthane de formule VII 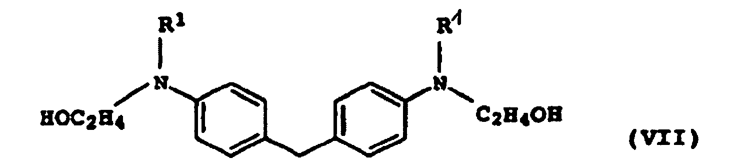 et on traite le 4,4'-bis(hydroxyéthylamino)diphénylméthane VII en présence d'un aminoaromatique de formule VIII ou IX 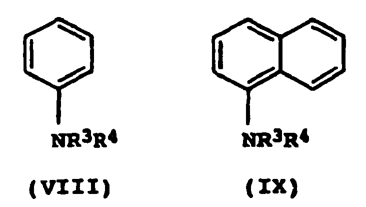 et d'une source d'anions avec un oxydant, avec obtention d'un colorant de type triarylméthane de formule I, qui est le cas échéant transformé avec un hydroxyde de métal alcalin ou de l'ammoniaque en un colorant de type triarylméthane de formule II.

2. Procédé selon la revendication 1, où Q représente un radical de formule V.

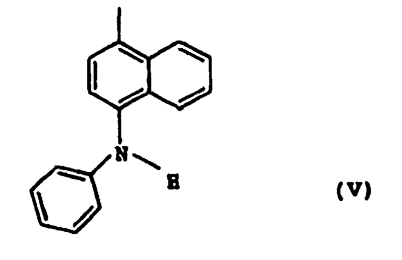

3. Procédé selon la revendication 1 ou 2, dans lequel l'oxydant est de l'oxygène moléculaire et le traitement est réalisé en présence d'un catalyseur activant l'oxygène, contenant un métal lourd et un médiateur redox.

4. Colorant de type triarylméthane de formule Ia ou IIa 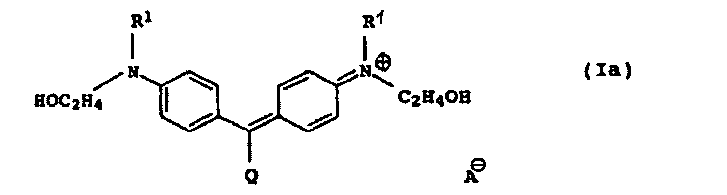 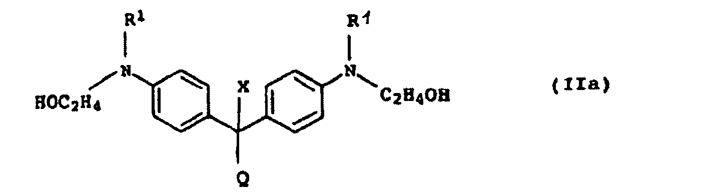 où
R¹ représente méthyle, éthyle ou hydroxyéthyle,
Q représente 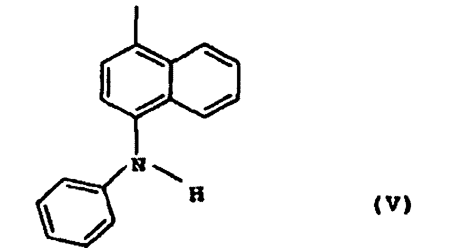
A^{Θ} représente l'équivalent d'un anion, et
X représente hydroxy ou amino.

5. Composition d'agent de teinture, contenant au moins un colorant de type triarylméthane de formule Ia ou IIa selon la revendication 4 et au moins un véhicule.

6. Utilisation du colorant de type triarylméthane de formule Ia ou IIa selon la revendication 4 pour la teinture de fibres de papier ou pour la production de rubans encreurs, d'encres pour tampons encreurs, d'encres d'imprimerie et de liquides d'écriture.
